**Europäisches Patentamt**

**European Patent Office**

**Office européen des brevets**

(19)

(11) Veröffentlichungsnummer: **0 109 477**
**A2**

# (12) EUROPÄISCHE PATENTANMELDUNG

(21) Anmeldenummer: **83104573.7**

(22) Anmeldetag: **10.05.83**

(51) Int. Cl.³: **F 16 H 5/28**

(30) Priorität: **23.09.82 DE 3235155**

(43) Veröffentlichungstag der Anmeldung:
**30.05.84 Patentblatt 84/22**

(84) Benannte Vertragsstaaten:
**AT DE FR GB IT**

(71) Anmelder: **Klöckner-Humboldt-Deutz
Aktiengesellschaft
Deutz-Mülheimer-Strasse 111 Postfach 80 05 09
D-5000 Köln 80(DE)**

(72) Erfinder: **Komp, Hermann-Josef, Dipl.-Ing.
Im Kronenberg 14
D-5358 Bad Münstereifel(DE)**

(54) **Betätigungseinrichtung für die Schaltglieder eines Wechselgetriebes.**

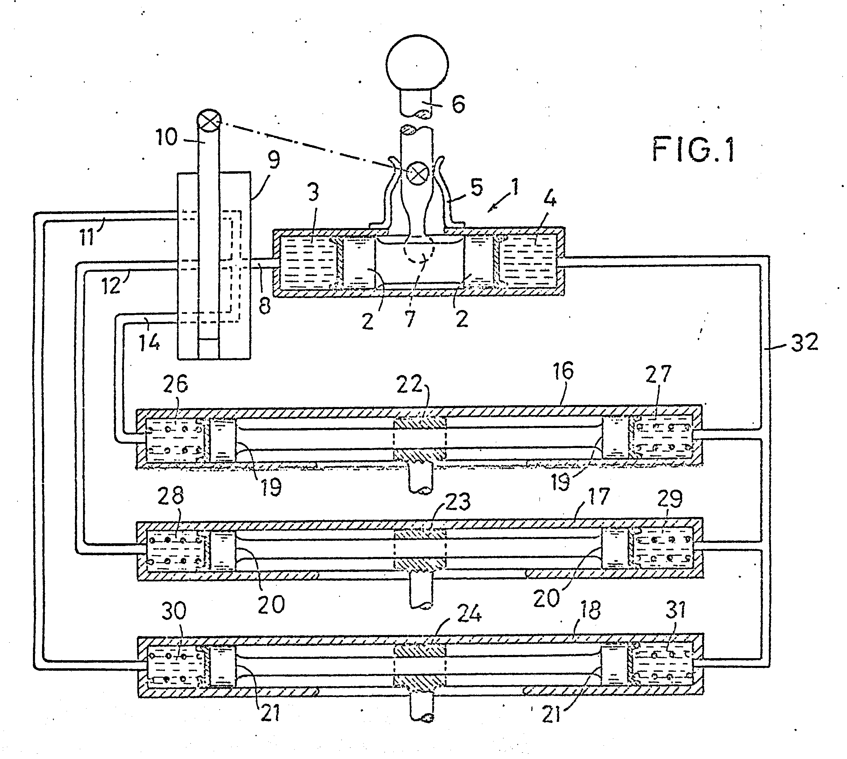

(57) Die Erfindung bezieht sich auf eine hydraulische Einrichtung zur Betätigung von Wechselgetrieben, mit einem vom Gangschalthebel bewegbaren Geberzylinder mit einem doppelt wirkenden Kolben, dessen beide Verdrängerräume über flexible Leitungen und zumindest ein vom Gangschalthebel beherrschtes Ventil an doppelt wirkende Stellzylinder für die einzelnen Gangstufen angeschlossen sind, deren Kolben an der Stellgliedern des Getriebes angreifen (Figur 1).

FIG.1

Klöckner-Humboldt-Deutz AG  △KHD

0109477

5000 Köln 80, den 05. Mai 1982
Unser Zeichen: D 82/027 AE-ZPB Da/Bi

## Betätigungseinrichtung für die Schaltglieder eines Wechselgetriebes

Die Erfindung bezieht sich auf eine Betätigungseinrichtung für die Schaltglieder eines Wechselgetriebes zur Übertragung der Schaltbewegungen vom Gangschalthebel beispielsweise zu den Schaltklauen des Getriebes.

Moderne Fahrerkabinen, z. B. von Traktoren, werden zur Dämpfung während des Betriebes auftretender Schwingungen und Stöße gegenüber dem Rahmen bzw. dem Fahrgestell federnd abgestützt. Um dabei einen besonders guten Schwingungsschutz für den Fahrer zu erzielen, sind hierzu langhubig federnde Elemente vorteilhaft. Die dabei zwischen dem Rahmen bzw. Fahrgestell und der Kabine entstehenden Federwege führen jedoch zu technischen Problemen an verschiedenen Betätigungseinrichtungen, insbesondere an der Getriebeschaltung. Die übliche mechanisch starre Verbindung des Gangschalthebels mit dem Getriebe erfordert aufgrund der gefederten Kabine große Durchtrittsöffnungen im Kabinenboden und führt zu großen Relativbewegungen zwischen Fahrer und Schalthebel. Vom Standpunkt der Geräuschdämmung und der Ergonomie ist beides als äußerst nachteilig anzusehen.

Der Erfindung liegt die Aufgabe zugrunde, eine Getriebeschalteinrichtung zu schaffen, die mit flexiblen Verbindungsgliedern zwischen dem Gangschalthebel und den zu bewegenden Schaltgliedern des Getriebes arbeitet.

Die Aufgabe wird erfindungsgemäß dadurch gelöst, daß der Gangschalthebel an einem hydraulischen Geberzylinder angreift und mit einem Verteiler in Wirkverbindung steht, durch den der Geberzylinder über flexible Leitungen wahlweise mit jeweils einem der Stellzylinder zum Schalten der gewünschten Gangstufen verbindbar ist und daß das hydraulische System mit Druckflüssigkeit gefüllt ist.

Mit einer solchen Schalteinrichtung ist das Schalten der Gangstufen des Wechselgetrieben selbst bei Kabinen mit langhubig federnden Elementen ohne Schwierigkeiten durchführbar, wobei die Lage des Schalthebels infolge der flexiblen Leitungen auf eine möglichst gute Handhabung für den Fahrer abgestimmt sein kann. Da das Schalten unmittelbar durch Muskelkraft erfolgt, ist es feinfühlig durchführbar, was insbesondere dem Schutz der Synchronisierung und der Schaltklauen zugute kommt. Außerdem kann eine Schalteinrichtung dieser Art an Getrieben unterschiedlichen Aufbaus verwendet werden, wobei eine Funktionssicherheit der üblichen mechanischen Schaltgestänge erreicht wird.

In Weiterbildung der Erfindung weisen der Geberzylinder beiderseits seines Kolbens je einen Arbeitsraum und die Stellzylinder an beiden Stirnseiten für ihre Kolben je einen Arbeitsraum auf, wobei der eine Arbeitsraum des Geberzylinders über den Verteiler wahlweise mit jeweils einem der Arbeitsräume der Stellzylinder der einen Stirnseite verbindbar ist und wobei der andere Arbeitsraum des Geberzylinders sowie auch die Arbeitsräume der Stellzylinder der anderen Stirnseite ständig miteinander in Verbindung stehen. Dabei ist es zweckdienlich, wenn als Verteiler ein Wegeventil vorgesehen ist, und wobei der Gangschalthebel, der Geberzylinder und das Wegeventil an bzw. in einem gemeinsamen Gehäuse untergebracht sind.

Aus Platzersparnis ist es weiterhin vorteilhaft, wenn das Gehäuse als Vorratsbehälter für die Druckflüssigkeit ausgebildet ist.

Damit im hydraulischen System stets ausreichend Druckflüssigkeit vorhanden ist, sind zwischen dem Vorratsbehälter und dem Geberzylinder Ausgleichsbohrungen für Druckflüssigkeit vorgesehen, deren Verbindung des Vorratsbehälters mit dem entsprechenden Arbeitsraum von der Schaltstellung des Kolbens im Geberzylinder abhängig ist. Dabei ist für den ständigen Ausgleich von Druckflüssigkeit vorgesehen, daß die beiden Arbeitsräume für den Kolben des Geberzylinders durch Bohrungen im Kolben und je eine als Rückschlagventil arbeitende Lippendichtung mit dem Vorratsbehälter in Verbindung stehen. Auf diese Weise wird eine auf Dauer stabile, von leichten Leckagen unabhängige Mittellage des Gangschalthebels bei nicht eingelegten Getriebegängen sichergestellt.

Die Erfindung kann in vorteilhafter Weise auch so ausgeführt sein, daß an der Schaltkulisse vom Gangschalthebel in den gewählten Schaltstellungen auslösbare elektrische Schalter angeordnet sind, die mit elektrisch ein- und ausschaltbaren Ventilen in den Verbindungsleitungen des Geberzylinders mit den einzelnen Arbeitsräumen an einer Stirnseite der Stellzylinder in Verbindung stehen.

Bei einer Betätigungseinrichtung vorgenannter Art, die für den Gangschalthebel eine Schaltkulisse, beispielsweise in doppelter H-Schaltung für 6 Gangstufen aufweist, ist erfindungsgemäß vorgesehen, daß in der ersten und letzten Schaltgasse der Schaltkulisse je ein vom Gangschalthebel betätigbarer elektrischer Schalter angeordnet ist, die mit je einem elektrisch im Öffnungssinn betätigbaren Ventil in den Verbindungsleitungen des Geberzylinders mit den Arbeitsräumen der zugeordneten zwei Stellzylinder in Verbindung stehen und daß die beiden Schalter der äußeren Schaltgassen mit einem Relais gekoppelt sind, das bei Nichtbetätigung der beiden genannten Schalter den Stromkreis zu einem in der Verbindungsleitung des mittleren Stellzylinders angeordneten elektrischen Ventil im Öffnungssinn desselben beeinflußt.

Die Erfindung wird im folgenden anhand von drei Ausführungsbeispielen unter Bezugnahme auf die Zeichnungen näher beschrieben.
Es zeigt:

Fig. 1 ein Schema einer hydraulischen Betätigungseinrichtung gemäß der Erfindung,

Fig. 2 im Schnitt einen als Vorratsbehälter für Druckflüssigkeit ausgebildetes Gehäuse mit Geberzylinder
und Wegeventil zur Wahl der Gangstufe,

Fig. 3 ein anderes Ausführungsbeispiel.

Nach Fig. 1 ist in einem hydraulischen Geberzylinder 1
mittig ein Kolben 2 angeordnet, der beiderseits mit Druckflüssigkeit gefüllte Arbeitsräume 3 und 4 aufweist. Am
Geberzylinder 1 ist in einer ortsfesten Kulisse 5 in
Längs- und Querrichtung schwenkbar ein Gangschalthebel 6
gelagert, der seinerseits mit einem Kugelgelenk 7 in den
Kolben 2 des Geberzylinders 1 eingreift. Der Arbeitsraum 3
steht hydraulisch durch eine Leitung 8 mit einem
Dreistellungsventil 9 in Verbindung, dessen Schieber 10 die
Leitung 8 je nach Schaltstellung mit einer von drei vom
Dreistellungsventil 9 abgehenden Leitungen 11, 12 bzw. 14
verbindet. Der Schieber 10 ist in nicht dargestellter Weise
mechanisch mit dem Gangschalthebel 6 verbunden, so daß bei
Betätigung desselben in Schwenkrichtung vertikal zur
Bildebene der Schieber 10 in Längsrichtung verschoben wird.
Zum Schalten der Gangstufen eines nicht dargestellten
Getriebes sind drei Stellzylinder 16, 17 und 18 vorgesehen,
deren Kolben 19, 20 und 21 mit je einem Stellglied 22, 23
bzw. 24 zur Betätigung des Schaltgetriebes in

Klöckner-Humboldt-Deutz AG KHD

05.05.1983
D 82/27

Verbindung stehen. Alle drei Stellzylinder 16, 17 und 18 haben für ihre Kolben 19, 20 bzw. 21 beiderseits Arbeitsräume, die mit 26, 27 bzw. 28, 29 bzw. 30, 31 bezeichnet sind. Die Schaltglieder 22 bis 24 sowie die daran angreifenden Kolben 19 bis 21 sind in Fig. 1 in Neutralstellung dargestellt. Dabei ist die Anordnung so getroffen, daß bei Betätigung des Schaltgliedes 22 aus der Neutralstellung nach links der erste Gang und nach rechts der zweite Gang geschaltet wird. Ebenso wird bei Betätigung des Schaltgliedes 23 aus der Neutralstellung nach links der dritte Gang und nach rechts der vierte Gang eingeschaltet. Analog dazu wird mit dem Schaltglied 24 der fünfte und sechste Gang geschaltet.

Die vom Dreistellungsventil 9 abgehenden Leitungen 11, 12 und 14 sind mit je einem der Arbeitsräume 26, 28 bzw. 30 verbunden. Außerdem sind die gegenüberliegenden Arbeitsräume 27, 29 und 31 durch eine gemeinsame Leitung 32 an den Arbeitsraum 4 des Geberzylinders 1 angeschlossen. Alle genannten Leitungen sowie die Arbeitsräume 26 bis 31 der drei Stellzylinder 16 bis 28 sind ebenso wie die Arbeitsräume 3 und 4 des Geberzylinders 1 mit Druckflüssigkeit gefüllt. Die Leitungen 11, 12, 14 und 32 sind zumindest teilweise als Schlauchleitungen ausgebildet, damit die den Gangschalthebel 6 mit dem Geberzylinder 1 und dem Dreistellungsventil 9 tragende und abgefederte Kabine in ihrer Bewegungsfreiheit nicht behindert wird.

Gemäß Darstellung in Fig. 1 steht der Gangschalthebel 6 in Neutralstellung, wobei sich der Kolben 2 des Geberzylinders in Mittelstellung befindet. Außerdem ist das Dreistellungsventil 9 über den Gangschalthebel so eingestellt, daß durch die Leitungen 8 und 14 eine Verbindung zwischen den Arbeitsräumen 3 und 26 besteht. Wird unter diesen Voraussetzungen der Gangschalthebel 6 entgegen dem Uhrzeigersinn verschwenkt, dann wird durch Verdrängung von Druckflüssigkeit aus dem Arbeitsraum 4 durch die Leitung 32 auf die Arbeitsräume 27 bis 31 Druck ausgeübt. Hierdurch kann aber nur der Kolben 19 infolge der Verbindung seines linken Arbeitsraumes 26 durch die Leitungen 8 und 14 mit dem Arbeitsraum 3 nach links ausweichen, so daß vom Schaltglied 22 der erste Gang im Getriebe eingeschaltet wird. Bei nachfolgender Betätigung des Gangschalthebels 6 im Uhrzeigersinn wird durch Verdrängung von Druckflüssigkeit aus dem Arbeitsraum 3 des Geberzylinders zum Arbeitsraum 26 hin der Kolben 19 nach rechts verschoben, wobei aus dem Arbeitsraum 27 Druckflüssigkeit durch die Leitung 32 zum Arbeitsraum 4 hin verdrängt wird. Bei der Bewegung des Kolbens 19 nach rechts wird über das Schaltglied 22 der zweite Gang im Getriebe eingeschaltet. Zum Einlegen der nachfolgenden Gänge des Getriebes 3 bis 6 wird der Gangschalthebel 6 dann quer zur Bildebene bewegt, damit über das Dreistellungsventil 9 der Arbeitsraum 3 des Geberzylinders 1 mit dem entsprechenden Stellzylinder 17 bzw. 18 in Verbindung kommt.

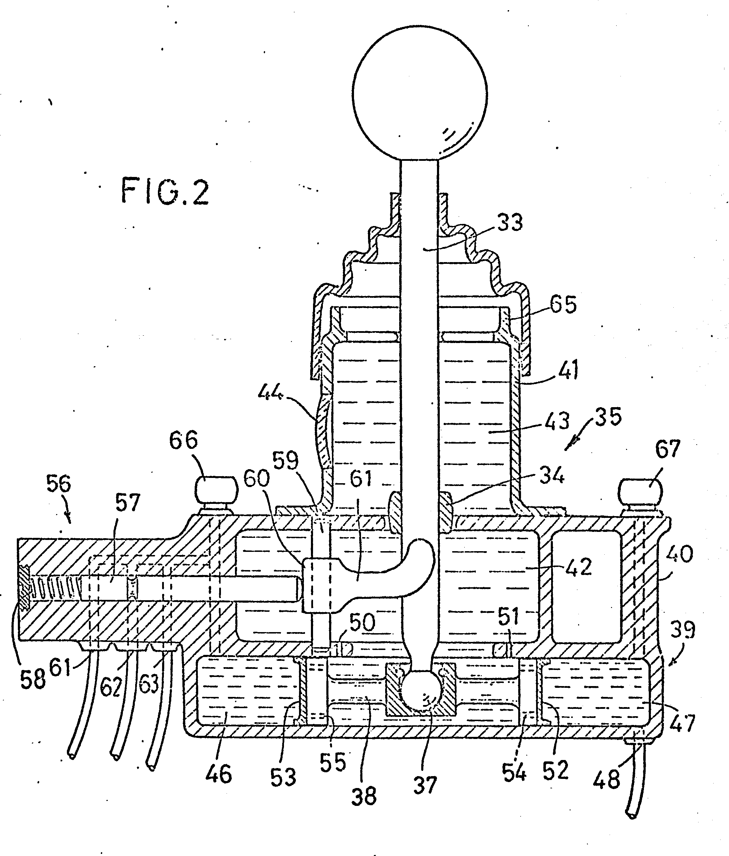

Die Fig. 2 zeigt einen Gangschalthebel 33, der mit Hilfe eines Gleitsteines 34 in einem Gehäuse 35 in Längsrichtung sowie quer dazu schwenkbar gelagert ist und mit seinem unteren kugeligen Ende 37 gelenkig in den Kolben 38 eines im Gehäuse 35 angeordneten Geberzylinders 39 einer Gangschalteinrichtung eingreift. Das Gehäuse 35 besteht aus einem unteren Teil 40 und einem darauf dicht befestigten oberen Gehäuseteil 41. Im Gehäuse 35 dienen zwei übereinander befindliche Kammern 42 und 43 als Vorratsbehälter für Druckflüssigkeit, zu deren Kontrolle im Gehäuseteil 41 ein Sichtfenster 44 angeordnet ist. Der Geberzylinder 39 hat beiderseits seines in Neutralstellung gezeigten Kolbens 38 je einen Arbeitsraum 46 bzw. 47. Am Arbeitsraum 47 ist ein Anschluß 48 für eine Leitung vorgesehen, die der Leitung 32 in Fig. 1 entspricht. Zwei im Raum 42 mündende Gehäusebohrungen 50 und 51 sind vorgesehen, damit bei auftretenden Leckagen im hydraulischen System jeweils beim Überfahren des Kolbens 38 Druckflüssigkeit durch die dabei freigegebene Bohrung 50 bzw. 51 vom Raum 42 in den betreffenden Arbeitsraum 46 bzw. 47 nachströmen kann.

Am Kolben 38 ist beiderseits je eine Lippendichtung 52 bzw. 53 so angeordnet, daß diese jeweils bei Zurücknahme des Kolbens 38 aus dem entsprechenden Arbeitsraum 46 bzw. 47 wie ein Rückschlagventil wirken,und indem diese dann die Mündungen in Längsrichtung verlaufender Bohrung 54 bzw. 55 im Kolben 38 freigeben. Die beiden Bohrungen 54 und 55 stehen andererseits mit dem Raum 42 in Verbindung und sind erforderlich, damit die aus den Hydraulikkreisen unter Druck abfließenden Leckölmengen beim Zurückwandern des Kolbens 38 über die entsprechende Dichtung 52 bzw. 53 aus dem Raum 42 nachgesaugt werden können.

Im Gehäuse 35 ist ferner ein Dreistellungsventil 56 untergebracht, dessen Schieber 57 durch eine Feder 58 belastet ist. Der Schieber 57 liegt mit seinem der Feder 58 abgewandten Ende an einem exzentrisch zu einem Zapfen 59 ausgebildeten Teil 60 eines Umlenkhebels 61 an. Der Umlenkhebel 61 ist mittels des Zapfens 59 schwenkbar im Gehäuseteil 42 gelagert und liegt durch die Kraft der Feder 58 am Gangschalthebel 33 an. Durch diese Anordnung kann bei Betätigung des Gangschalthebels 33 in einer Ebene vertikal zur Bildfläche das Dreistellungsventil 56 in die drei möglichen Schaltstellungen gebracht werden. Am Dreistellungsventil 56 sind ausgangsseitig drei Anschlüsse 62, 63 und 64 für Leitungen vorgesehen, die den Leitungen 11, 12 und 14 gemäß Fig. 1 entsprechen. Auf dem Teil 43 des Gehäuses 35 ist ein Gewindebund 65 vorgesehen, um das System bei herausgezogenem Gangschalthebel 33 an ein übliches Gerät zum Befüllen mit Druckflüssigkeit anschließen zu können. Das dabei erforderliche Belüften des hydraulischen Systems erfolgt über zwei Nippel 66 und 67.

Die Wirkungsweise dieser Einrichtung entspricht im wesentlichen der entsprechenden Gangschalteinrichtung in Fig. 1. Vorteilhaft bei dieser Ausbildung einer Gangschaltvorrichtung ist die kompakte Bauweise unter Einbeziehung des Geberzylinders 39 sowie des Dreistellungsventils 56, wobei das diese Teile aufnehmende Gehäuse 35 gleichzeitig als Vorratsbehälter für die Druckflüssigkeit dient. Dies hat wiederum den Vorteil, daß alle Gleitstellen und unter Bewegung gegen Druck abzudichtenden Stellen auch auf der drucklosen Seite in Druckflüssigkeit getaucht sind. Damit ergibt sich ein geringer Verschleiß und eine hohe Lebensdauer. Ein Nachsaugen von Luft ist nicht möglich.

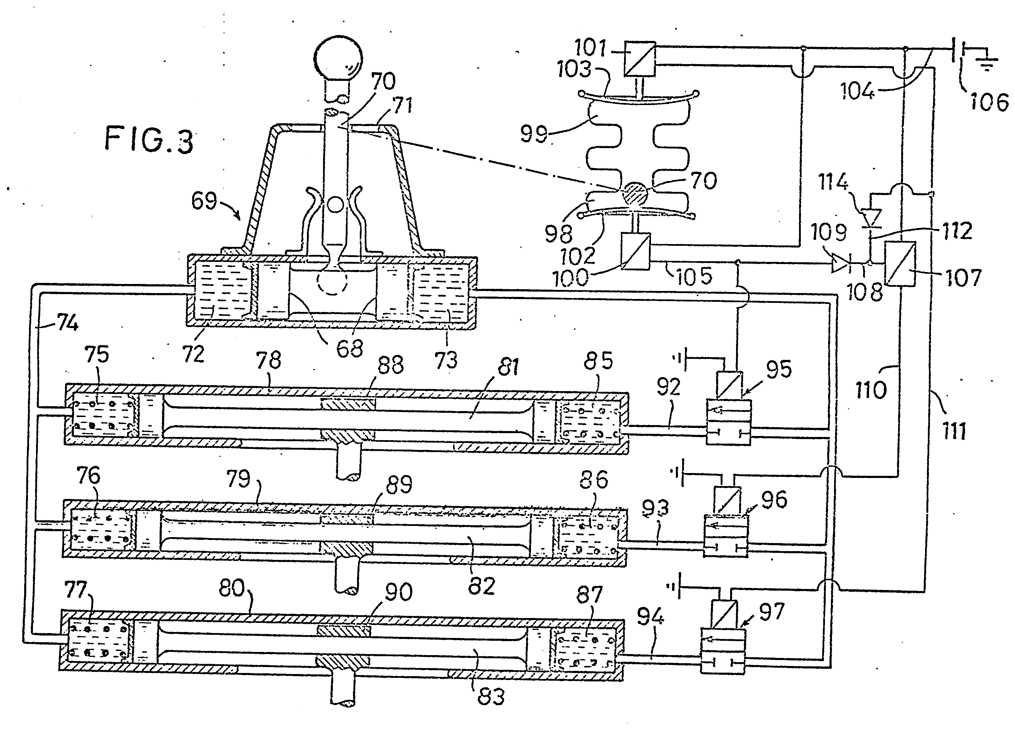

Bei der Betätigungseinrichtung gemäß Fig. 3 ist ebenfalls ein am Kolben 68 eines Geberzylinders 69 angreifender Gangschalthebel 70 vorgesehen, der in einer Schaltkulisse 71 geführt ist. Der Geberzylinder 69 hat beiderseits seines Kolbens 68 mit Druckmittel gefüllte Arbeitsräume 72 und 73. Der Arbeitsraum 72 steht durch eine sich verzweigende Leitung 73 mit drei Arbeitsräumen 74, 75 und 76 in drei parallel zueinander geschalteten Stellzylindern 78, 79 und 80 in Verbindung, deren Kolben mit 81, 82 bzw. 83 bezeichnet sind. Die drei Kolben 81, 82 und 83 sind in Neutralstellung dargestellt und haben außer den Arbeitsräumen 75, 76 und 77 an der linken Seite auch auf rechten Seite je einen Arbeitsraum 85, 86 und 87. Außerdem steht jeder der Kolben 81, 82 und 83 mit einem Schaltglied 88, 89 bzw. 90 derart in Verbindung, daß mit dem Kolben 81 in der einen bzw. anderen Schaltrichtung der erste bzw. zweite Gang, mit dem Kolben 82 der dritte bzw. der vierte Gang und schließlich mit dem Kolben 83 der fünfte bzw. der sechste Gang schaltbar ist. Die Arbeitsräume 85, 86 und 87 sind durch Leitungen 92, 93 und 94 und darin angeordnete, elektrisch betätigbare Ventile 95, 96 bzw. 97 mit dem Arbeitsraum 73 des Stellzylinders 69 hydraulisch verbunden.

Die in der Zeichnung oben rechts in Draufsicht gezeigte Schaltkulisse 71 hat in doppelter H-Schaltung angeordnete Schaltgassen 98, 99 für den Gangschalthebel 70. Nahe der ersten und letzten Schaltgasse 98 bzw. 99 ist je ein elektrischer Schalter 100 bzw. 101 angeordnet, deren Schaltglieder 102 bzw. 103 so in die entsprechende Schaltgasse 98 bzw. 99 hineinragen, daß sie jeweils durch den eingelegten Gangschalthebel 70 im Schließsinn betätigt werden. Beim Einlegen des Gangschalthebels 70 in die Schaltgasse 98 und folglicher Betätigung des Schalters 100 wird durch die Leitungen 104 und 105 ein Stromkreis mit einer Stromquelle 106 geschlossen, der das Ventil 95 im Öffnungssinn beeinflußt. Von der Leitung 105 zweigt eine zu einem Relais 107 führende Leitung 108 ab, in der eine Diode 109 angeordnet ist. Durch diese Anordnung wird das Relais 107 gleichfalls über den Schalter 100 mit der Stromquelle 106 verbunden und dadurch gesperrt, so daß bei dieser Schaltstellung die nachfolgende Leitung 110 stromlos und das Ventil 96 ebenso wie das Ventil 97 gesperrt ist.

Gelangt der Gangschalthebel 70 beim nächsten Schaltvorgang in die mittlere Schaltgasse, dann sind beide Schalter 100 und 101 geöffnet, so daß das Relais 107 seinen Schaltkontakt schließt und damit das Ventil 96 durch Schließen des Stromkreises über die Leitung 110 im Öffnungssinn beeinflußt. Wird der Gangschalthebel 70 schließlich aus der mittleren Schaltgasse in die letzte Schaltgasse 99 eingelegt, schließt der Schalter 101 und eine daran anschließende Leitung 111 wird mit der Stromquelle 106 verbunden. Damit wird das Ventil 97 geöffnet. Gleichzeitig wird aber auch das Relais 107 über eine Leitung 112 und eine Diode 114 mit elektrischer Energie versorgt, so daß das Relais 107 in Sperrstellung geht. Die Ventile 95 und 96 sind somit bei dieser Schaltstellung des Gangschalthebels 70 gesperrt.

Durch diese Anordnung ist je nach Stellung des Gangschalthebels 70 immer nur eines der Ventil 95, 96 bzw. 97 geöffnet, so daß der Arbeitsraum 73 des vom Gangschalthebel 70 betätigten Geberzylinders 69 zum Schalten des ersten und zweiten Ganges mit dem Arbeitsraum 85 des Stellzylinders 78, zum Schalten des dritten und vierten Ganges mit dem Arbeitsraum 86 des Stellzylinders 79 und zum Schalten des fünften und sechsten Ganges mit dem Arbeitsraum 78 des Stellzylinders 80 in Verbindung steht.

Das Schalten der einzelnen Gänge erfolgt in der zu Fig. 1 beschriebenen Weise durch Verschwenken des Gangschalthebels in den einzelnen Schaltgassen, wobei die Stellzylinder 78 bis 80 vom Geberzylinder 69 her zur Betätigung ihrer Kolben 81 bis 83 von der einen bzw. der anderen Seite her mit Druckflüssigkeit beaufschlagt werden.

5000 Köln 80, den 05. Mai 1982
Unser Zeichen: D 82/027 AE-ZPB Da/Bi


P a t e n t a n s p r ü c h e


1.    Betätigungseinrichtung für die Schaltglieder eines Wechselgetriebes zur Übertragung der Schaltbewegungen vom Gangschalthebel (6 bzw. 70) beispielsweise zu den Schaltklauen des Getriebes, dadurch gekennzeichnet, daß der Gangschalthebel (6 bzw. 70) an einem hydraulischen Geberzylinder (1 bzw. 69) angreift und mit einem Verteiler (9 bzw. 95 bis 114) in Wirkverbindung steht, durch den der Geberzylinder (1 bzw. 69) hydraulisch über flexible Leitungen (11, 12, 14, 32 bzw. 74, 94) wahlweise mit jeweils einem Stellzylinder (16, 17, 18 bzw., 78, 79, 80) zum Schalten der gewünschten Gangstufe des Getriebes verbindbar ist und daß das hydraulische System mit Druckflüssigkeit gefüllt ist.


2.    Betätigungseinrichtung nach Anspruch 1, dadurch gekennzeichnet, daß der Geberzylinder (1 bzw. 69) beiderseits seines Kolbens (2 bzw. 68) je einen Arbeitsraum (3, 4 bzw. 72, 73) und die Stellzylinder (16, 17, 18 bzw. 78, 79, 80) an beiden Stirnseiten für ihre Kolben (19, 20, 21 bzw. 81, 82, 83) je einen Arbeitsraum (26 bis 31 bzw. 75, 76, 77 und 85, 86, 87) aufweisen, daß der eine Arbeitsraum (3 bzw. 73) des Geberzylinders (1 bzw. 69) über den Verteiler (9 bzw. 95 bis 114) wahlweise mit jeweils einem der Arbeitsräume (26, 28, 30 bzw. 85, 86, 87) der Stellzylinder (16, 17, 18 bzw. 78, 79, 80) der einen Stirnseite verbindbar ist, und daß der andere Arbeitsraum (4 bzw. 72) des Geberzylinders (1 bzw. 69) sowie auch die Arbeitsräume (27, 29, 31 bzw. 75, 79, 80) der Stellzylinder (16, 17, 18 bzw. 78, 79, 80) der anderen Stirnseite ständig miteinander in Verbindung stehen.

3.    Betätigungseinrichtung nach den Ansprüchen 1 und 2, dadurch gekennzeichnet, daß als Verteiler ein Wegeventil (56) vorgesehen ist und daß der Gangschalthebel (33), der Geberzylinder (39) und das Wegeventil (56) an bzw. in einem gemeinsamen Gehäuse (35) untergebracht sind.

4.    Betätigungseinrichtung nach einem der vorhergehenden Ansprüche, dadurch gekennzeichnet, daß das Gehäuse (35) als Vorratsbehälter für die Druckflüssigkeit ausgebildet ist.

5.    Betätigungseinrichtung nach einem der vorhergehenden Ansprüche, dadurch gekennzeichnet, daß zwischen dem Vorratsbehälter (42) und dem Geberzylinder (39) Ausgleichsbohrungen (50, 51) für Druckflüssigkeit vorgesehen sind, deren Verbindung des Vorratsbehälters (42) mit dem entsprechenden Arbeitsraum (46, 47) von der Schaltstellung des Kolbens (38) im
Geberzylinder (39) abhängig ist.

6. Betätigungseinrichtung nach einem der vorhergehenden Ansprüche,
dadurch gekennzeichnet, daß die beiden Arbeitsräume (50,
51) für den Kolben (38) des Geberzylinders (39) ständig
durch Bohrungen (54 bzw. 55) im Kolben (38) und je eine als
Rückschlagventil arbeitende Lippendichtung (52 bzw. 53) mit
dem Vorratsbehälter (42) in Verbindung stehen.

7. Betätigungseinrichtung nach einem der vorhergehenden Ansprüche,
dadurch gekennzeichnet, daß an der Schaltkulisse (71) vom
Gangschalthebel (70) in den gewählten Schaltstellungen
auslösbare elektrische Schalter (100, 101) angeordnet sind,
die mit elektrisch ein- und ausschaltbaren Ventilen (95,
96, 97) in den Verbindungsleitungen (92 bzw. 93 bzw. 94)
von einem der Arbeitsräume (73) des Geberzylinders (69) mit
den einzelnen Arbeitsräumen (85, 86, 87) an einer
Stirnseite der Stellzylinder (78, 79, 80) in Verbindung
stehen.

8. Betätigungseinrichtung nach einem der vorhergehenden Ansprüche, wobei für den Gangschalthebel (70) eine
Schaltkulisse (71) in doppelter H-Schaltung für sechs Gangstufen vorgesehen ist,

dadurch gekennzeichnet, daß in der ersten und letzten Schaltgasse (98 bzw. 99) der Schaltkulisse (71) je ein vom Gangschalthebel (70) betätigbarer elektrischer Schalter (100 bzw. 101) angeordnet ist, die mit je einem elektrisch im Öffnungssinn betätigbaren Ventil (95, 97) in den Verbindungsleitungen (92, 94) des Geberzylinders (69) mit den Arbeitsräumen (85, 87) der zugeordneten zwei Stellzylinder (78, 80) in Verbindung stehen und daß die beiden Schalter (100, 101) der äußeren Schaltgassen (98, 99) elektrisch mit einem Relais (107) gekoppelt sind, das bei Nichtbetätigung der beiden genannten Schalter (100, 101) den Stromkreis zu einem in der Verbindungsleitung (96) des mittleren Stellzylinders (79) angeordneten elektrischen Ventil (96) im Öffnungssinn desselben beeinflußt.

FIG.1

0109477

D 821

FIG.2

FIG.3

0109477